# EUROPÄISCHE PATENTSCHRIFT

(11) **EP 1 706 263 B1**
(45) Veröffentlichungstag und Bekanntmachung des Hinweises auf die Patenterteilung: **27.06.2007**
(21) Anmeldenummer: 04764587.4
(22) Anmeldetag: 28.08.2004
(51) Int. Cl.: B32B 17/10, C09J 7/02, B65D 85/48

(54) **Brandschutzglas mit Kantenschutz**
Fire-resistant Glass Provided with an Edge Protection
Verre de protection contre le feu muni d'un protège-arête

(30) Priorität: 23.01.2004 DE 202004001010 U
(43) Veröffentlichungstag der Anmeldung: 04.10.2006
(73) Patentinhaber: K.M.B. Klebetechnik GMBH, 44357 Dortmund (DE)
(72) Erfinder: ZOROWIK, Peter, Johannes, 44357 Dortmund (DE); KAISER, Klaus, 58300 Wetter (DE)
(74) Vertreter: Dabringhaus, Walter
(86) Internationale Anmeldenummer: PCT/EP2004/009613
(87) Internationale Veröffentlichungsnummer: WO 2005/070666

(56) Entgegenhaltungen:
- EP-A- 1 090 969
- EP-A- 1 095 993
- DE-A- 3 610 487
- US-A- 3 899 621
- US-A- 5 585 188

## Beschreibung

Die Erfindung richtet sich auf ein Brandschutzglas aus einer Mehrzahl von Glasscheiben und dazwischen angeordneten, feuerhemmenden Zwischenschichten aus wasserhaltigem Alkalisilikat od. dgl., wobei die Kanten des Brandschutzglases mit einem Kantenschutzband verschlossen sind.

Brandschutzgläser sind in mehrschichtigem Aufbau und in vielfacher Ausgestaltung bekannt. Hier sei leidiglich als Beispiel auf die DE-199 16 506-C verwiesen. Dabei ist es auch bekannt, die Kanten wenigstens bis zum endgültigen Einbau, beispielsweise mit Polyesterklebebändern, zu verschließen.

Es hat sich nun gezeigt, daß diese Kantenschutzbänder dem rauhen Einsatz auf Baustellen u. dgl. nicht immer gewachsen sind, so daß es Aufgabe der Erfindung ist, hier eine Lösung zu schaffen, die einen hochbelastbaren, verschleißfesten Kantenschutz gewährleistet.

Bei einem Brandschutzglas der eingangs bezeichneten Art wird diese Aufgabe gemäß der Erfindung dadurch gelöst, daß das Kantenschutzband aus einer nach außen weisenden Polyurethan-Folie, einer Klebebeschichtung, einer Aluminiumfolie und einer weiteren Klebebeschichtung, die vor Aufbringung des Kantenschutzbandes, wie an sich bekannt, von einem Silikonpapier geschützt ist, gebildet ist.

Bei einem solchen Aufbau eines entsprechenden Kantenschutzbandes ist gewährleistet, daß z.B. beim Abstellen der Scheibe vor dem Einbau auf einem nicht ausreichend gut gereinigten Boden z.B. kleine Steine od. dgl. nicht dazu führen, daß der Kantenschutz durchlöchert wird oder in sonstiger Weise verletzt wird, da die erfindungsgemäß eingesetzte Polyurethan-Folie einen entsprechenden Widerstand gegenüber derartigen Verletzungen bildet, sie ist entsprechend flexibel und reißfest.

Da es Einsatzfälle gibt, in denen derartige Scheiben noch stärker gegen Randbeschädigungen geschützt werden müssen, sieht in einer Ausgestaltung die Erfindung vor, daß das Kantenschutzband mit einer weiteren, nach außen weisenden selbstklebenden PU-Folie versehen ist, so daß sich ein Doppelschutz aus Polyurethan-Folie ergibt.

Weitere Ausgestaltungen der Erfindung sind in den Unteransprüchen wiedergegeben, wobei eine Besonderheit der Erfindung darin besteht, daß die weitere, in der Gebrauchslage auf den äußeren Glasscheiben aufliegende Klebebeschichtung eine Dicke aufweist, die etwa der Dicke der Polyurethan-Folie mit Klebebeschichtung und Aluminiumfolie entspricht. Diese Ausgestaltung stellt sicher, daß in den Eckbereichen, in denen in 90° aufeinanderzulaufende Kantenschutzfolienabschnitte übereinanderlappen, diese Klebebeschichtung mit Sicherheit eine dichte Eckverbindung gewährleistet, die verhindert, daß bei normalem Gebrauch der Brandschutzscheibe z.B. versehentlich Wasser zwischen Klebeschichtung und Scheibe eindringt und bei entsprechendem Kriechverhalten dann etwa zu den Alkalisilikat-Schichten gelangt, was es zu vermeiden gilt.

Zweckmäßig liegt die Dicke der die Außenschicht bildenden Polyurethan-Folie zwischen 25 und 300 µm, die Dicke der der ersten Polyurethan-Folie folgenden Klebebeschichtung liegt etwa bei 10 µm. Die die Sperrschicht bildende Dicke der Aluminiumfolie liegt erfindungsgemäß zwischen 25 und 150 µm, wobei die Dicke der weiteren inneren Klebebeschichtung zwischen 50 und 350 µm liegt, um den oben angegebenen Anforderungen gerecht zu werden, nämlich in der Gebrauchslage in den Ecken eine vollständige Abdichtung zu gewährleisten.

Wird eine zusätzliche weitere PU-Folie vorgesehen, so weist diese erfindungsgemäß eine Dicke von 200 bis 500 µm und die dazugehörige Klebebeschichtung eine Dicke von 50 bis 200 µm auf.

Erfindungsgemäß wird die Klebebeschichtung von einem lösungsmittelfreien Rein-Acrylat-Kleber auf Dispersionsbasis gebildet.

Nach der Erfindung kann auch vorgesehen sein, die Ecken des Brandschutzglases mit einem zusätzlichen Eckenschutz aus einer selbstklebenden PU-Folie zu versehen, die erfindungsgemäß eine Dicke von 100 bis 500 µm aufweist und deren Klebebeschichtung selbst wiederum eine Dicke von 50 bis 200 µm aufweist.

Um das Verarbeiten zu erleichtern, sieht die Erfindung auch vor, daß die Eckenschutzfolie als gestanzter und vorperforierter Zuschnitt mit Silikonabdeckung der Klebebeschichtung ausgebildet ist.

Weitere Merkmale, Einzelheiten und Vorteile der Erfindung ergeben sich aufgrund der nachfolgenden Beschreibung sowie anhand der Zeichnung. Diese zeigt in
- Fig. 1: einen schematischen Schnitt durch eine erfindungsgemäße Kantenschutzfolie,
- Fig. 2: eine vereinfachte Darstellung eines Eckbereiches eines erfindungsgemäß ausgestatteten Brandschutzglases,
- Fig. 3: einen schematischen Schnitt durch eine zweite Ausführungsform der erfindungsgemäßen Kantenschutzfolie sowie in
- Fig. 4: eine vereinfachte Darstellung eines weiteren Eckbereiches eines Brandschutzglases in abgewandelter Ausführung.

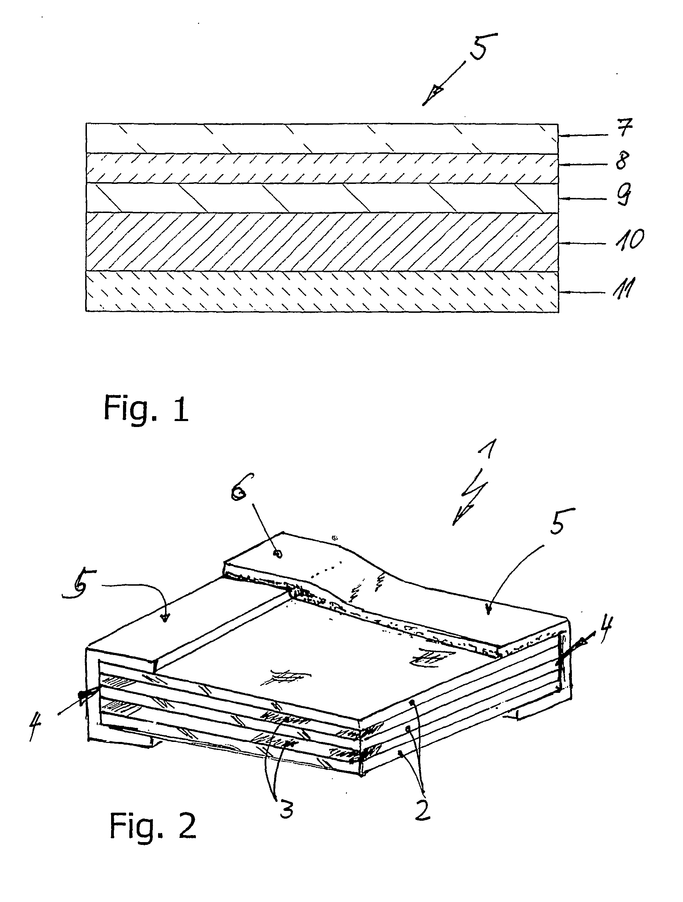

Ein in Fig. 2 allgemein mit 1 bezeichnetes mehrschichtiges Brandschutzglas, von dem nur vereinfacht wiedergegeben eine Ecke dargestellt ist, besteht hier beispielsweise aus drei Glasscheiben 2, die von zwei Schichten aus Alkalisilikat, in Fig. 2 mit 3 bezeichnet, auf Abstand gehalten sind. Die mit 4 bezeichneten Außenkanten des Brandschutzglases 1 werden durch ein allgemein mit 5 bezeichnetes Kantenschutzband geschützt, dessen Bandbereiche sich in den Ecken 6, wie angedeutet, überlappen.

Das vereinfacht und geschnitten dargestellte Kantenschutzband 5 ist mehrschichtig aufgebaut und weist eine Polyurethan-Folie 7 außen auf, gefolgt von einer Klebebeschichtung 8, einer innen liegenden Aluminiumfolie 9, einer weiteren Klebebeschichtung 10 sowie vor dem Aufbringen einen Silikonpapierstreifen 11, der die weitere Klebebeschichtung schützt bzw. das ungewollte Verkleben mit anderen Objekten verhindert.

Um zu verhindern, daß Wasser in den Scheibenecken 6 unter dem Kantenschutzband hindurch kriecht, was passieren kann, wenn die Überlappungsbereiche nicht sauber verklebt sind, ist nach der Erfindung in einer Ausgestaltung vorgesehen, daß die Dicke der weiteren Klebebeschichtung 10 etwa der Dicke der Polyurethan-Folie plus der entsprechenden Klebebeschichtung 8 sowie der Aluminiumfolie 9 entspricht.

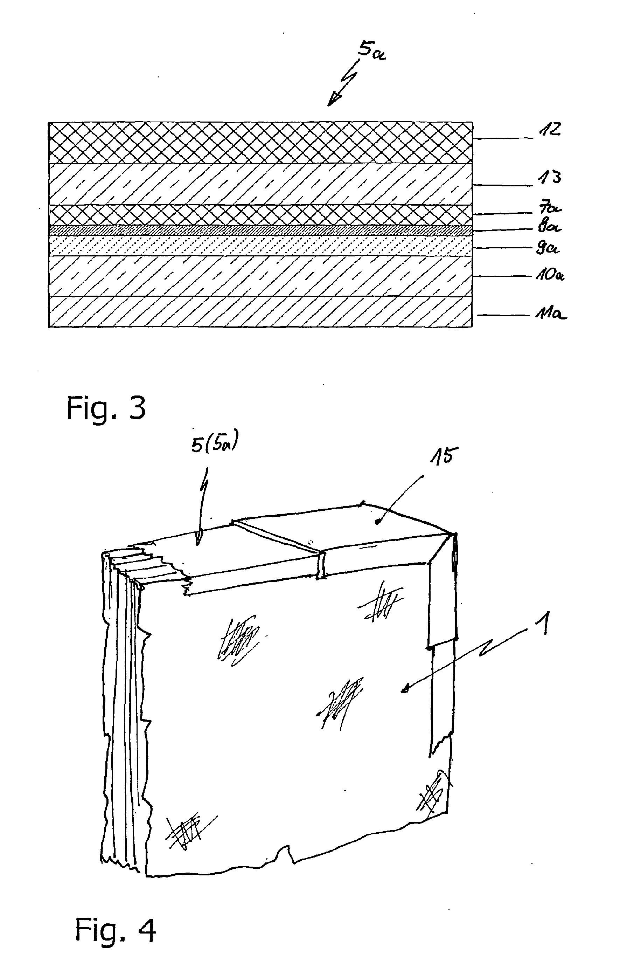

In Fig. 3 ist ein abgewandelter Schutzfolienaufbau wiedergegeben, wobei hier über der beim Beispiel der Fig. 1 nach außen weisenden Polyurethan-Folie 7a eine dickere Polyurethan-Folie 12 mit Klebebeschichtung 13 zugeordnet ist. Die sonstigen Folienelemente tragen hier die gleichen Bezugszeichen wie in Fig. 1 versehen mit einem kleinen "a".

Damit ergibt sich ein Gesamtaufbau des mit 5a bezeichneten Kantenschutzbandes von in der Gebrauchslage außen nach innen mit der ersten dickeren Polyurethan-Folie 12, der zugeordneten Klebebeschichtung 13, der nachfolgenden Polyurethan-Folie 7a und der Klebebeschichtung 8a gefolgt von einer Aluminium-Folie 9a, einer Klebebeschichtung 10a und dem in der Versandlage notwendigen abdeckenden Silikonpapier 11a.

In Fig. 4 ist schließlich noch angedeutet, daß die Ecken eines Brandschutzglases 1 mit einem zusätzlichen Eckenschutz, allgemein mit 14 bezeichnet, versehen sein können, so daß ein entsprechender Zuschnitt dem Verbraucher bzw.

Glashersteller zur Verfügung gestellt werden kann. Ein solcher Eckenschutz kann problemlos zusätzlich aufgeklebt werden.

An dieser Stelle sei nochmals darauf hingewiesen, daß die Proportionen, insbesondere die Dicken der hier eingesetzten Folie, in den Figuren stark übertrieben dargestellt sind ebenso wie etwa die Dicke des zusätzlichen Eckenschutzes u. dgl.

Natürlich ist das beschriebene Ausführungsbeispiel der Erfindung noch in vielfacher Hinsicht abzuändern, ohne den Grundgedanken zu verlassen. So ist die Erfindung insbesondere nicht auf den dargestellten fünfschichtigen Scheibenaufbau beschränkt, auch nicht auf Dicke und Breite des entsprechenden Kantenschutzbandes u. dgl. mehr.

## Patentansprüche

1. Brandschutzglas aus einer Mehrzahl von Glasscheiben und dazwischen angeordneten, feuerhemmenden Zwischenschichten aus wasserhaltigem Alkalisilikat od. dgl., wobei die Kanten des Brandschutzglases mit einem Kantenschutzband verschlossen sind,
**dadurch gekennzeichnet,**
**daß** das Kantenschutzband (5) aus einer nach außen weisenden Polyurethan-Folie (7), einer Klebebeschichtung (8), einer Aluminiumfolie (9) und einer weiteren Klebebeschichtung (10), die vor Aufbringung des Kantenschutzbandes, wie an sich bekannt, von einem Silikonpapier (11) geschützt ist, gebildet ist.

2. Brandschutzglas nach Anspruch 1,
**dadurch gekennzeichnet,**
**daß** die weitere Klebebeschichtung (10) eine Dicke aufweist, die etwa der Dicke der Polyurethan-Folie (7) mit Klebebeschichtung (8) und Aluminiumfolie (9) entspricht, wobei die Dicke der Polyurethan-Folie (7) zwischen 25 und 300 µm liegt.

3. Brandschutzglas nach Anspruch 1 oder 2,
**dadurch gekennzeichnet,**
**daß** die Dicke der ersten Klebebeschichtung (8) zwischen 5 µm und 20 µm vorzugsweise bei 10 µm liegt.

4. Brandschutzglas nach Anspruch 1 oder einem der folgenden,
**dadurch gekennzeichnet,**
**daß** die Dicke der Aluminiumfolie (9) zwischen 25 und 150 µm und die Dicke der weiteren Klebebeschichtung (10) zwischen 60 und 350 µm liegt.

5. Brandschutzglas nach Anspruch 1 oder einem der folgenden,
**dadurch gekennzeichnet,**
**daß** die weitere Klebebeschichtung (10) von einem lösungsmittelfreien Rein-Acrylat-Kleber auf Dispersionsbasis gebildet ist.

6. Brandschutzglas nach Anspruch 1 oder einem der folgenden,
**dadurch gekennzeichnet,**
**daß** das Kantenschutzband (5a) mit einer weiteren, nach außen weisenden selbstklebenden PU-Folie (12) versehen ist.

7. Brandschutzglas nach Anspruch 6,
**dadurch gekennzeichnet,**
**daß** die weitere PU-Folie (12) eine Dicke von 200 bis 500 µm und die Klebebeschichtung (13) eine Dicke von 50 bis 200 µm aufweist.

8. Brandschutzglas nach Anspruch 1 oder einem der folgenden,
**dadurch gekennzeichnet,**
**daß** die Ecken des Brandschutzglases (1) mit einer zusätzlichen Eckenschutzfolie (15) aus einer selbstklebenden PU-Folie versehen sind.

9. Brandschutzglas nach Anspruch 1 oder einem der folgenden,
**dadurch gekennzeichnet,**
**daß** die PU-Folie der Eckenschutzfolie (15) eine Dicke von 100 bis 500 µm und deren Klebebeschichtung eine Dicke von 50 bis 200 µm aufweist.

10. Brandschutzglas nach Anspruch 1 oder einem der folgenden,
**dadurch gekennzeichnet,**
**daß** die Eckenschutzfolie (15) als gestanzter und vorperforierter Zuschnitt mit Silikonabdeckung der Klebebeschichtung ausgebildet ist.

## Claims

1. A fire-resistant glass comprising a plurality of glass panes and fire-retardant intermediate layers arranged therebetween and comprising aqueous alkali silicate or the like, wherein the edges of the fire-resistant glass are closed with an edge protection strip,
**characterised in that** the edge protection strip (5) is formed from an outwardly facing polyurethane film (7), an adhesive coating (8), an aluminium film (9) and a further adhesive coating (10) which is protected by a silicone paper (11) prior to application of the edge protection strip as is known per se.

2. A fire-resistant glass according to claim 1 **characterised in that** the further adhesive coating (10) is of a thickness which approximately corresponds to the thickness of the polyurethane film (7) with adhesive coating (8) and aluminium film (9), wherein the thickness of the polyurethane film (7) is between 25 and 300 µm.

3. A fire-resistant glass according to claim 1 or claim 2 **characterised in that** the thickness of the first adhesive coating (8) is between 5 µm and 20 µm, preferably being 10 µm.

4. A fire-resistant glass according to claim 1 or one of the following claims **characterised in that** the thickness of the aluminium film (9) is between 25 and 150 µm and the thickness of the further adhesive coating (10) is between 60 and 350 µm.

5. A fire-resistant glass according to claim 1 or one of the following claims **characterised in that** the further adhesive coating (10) is formed by a solvent-free pure acrylate adhesive on a dispersion basis.

6. A fire-resistant glass according to claim 1 or one of the following claims **characterised in that** the edge protection strip (5a) is provided with a further, outwardly facing, self-adhesive PU film (12).

7. A fire-resistant glass according to claim 6 **characterised in that** the further PU film (12) is of a thickness of 200 to 500 µm and the adhesive coating (13) is of a thickness of 50 to 200 µm.

8. A fire-resistant glass according to claim 1 or one of the following claims **characterised in that** the corners of the fire-resistant glass (1) are provided with an additional corner protection film (15) comprising a self-adhesive PU film.

9. A fire-resistant glass according to claim 1 or one of the following claims **characterised in that** the PU film of the corner protection film (15) is of a thickness of 100 to 500 µm and the adhesive coating thereof is of a thickness of 50 to 200 µm.

10. A fire-resistant glass according to claim 1 or one of the following claims **characterised in that** the corner protection film (15) is in the form of a stamped and pre-perforated blank with silicone covering of the adhesive coating.

## Revendications

1. Verre antifeu comprenant une pluralité de plaques de verre et de couches intermédiaires ignifuges en silicate alcalin hydraté disposées entre celles-ci, les arêtes du verre antifeu étant fermées par une bande protège-arête, **caractérisé en ce que** la bande protège-arête (5) est formée d'une feuille de polyuréthane (7) orientée vers l'extérieur, d'un revêtement adhésif (8), d'une feuille d'aluminium (9) et d'un autre revêtement adhésif (10) qui est protégé avant l'application de la bande protège-arête, comme cela est connu en soi, par un papier siliconé (11).

2. Verre antifeu selon la revendication 1, **caractérisé en ce que** l'autre revêtement adhésif (10) présente une épaisseur qui correspond approximativement à l'épaisseur de la feuille de polyuréthane (7) dotée du revêtement adhésif (8) et de la feuille d'aluminium (9), l'épaisseur de la feuille de polyuréthane (7) étant comprise entre 25 et 300 µm.

3. Verre antifeu selon la revendication 1 ou 2, **caractérisé en ce que** l'épaisseur du premier revêtement adhésif (8) est comprise entre 5 µm et 20 µm, et s'élève de préférence à 10 µm.

4. Verre antifeu selon la revendication 1 ou l'une des suivantes, **caractérisé en ce que** l'épaisseur de la feuille d'aluminium (9) est comprise entre 25 et 150 µm et l'épaisseur de l'autre revêtement adhésif (10) est comprise entre 60 et 350 µm.

5. Verre antifeu selon la revendication 1 ou l'une des suivantes, **caractérisé en ce que** l'autre revêtement adhésif (10) est formé par une colle de dispersion à base d'acrylate pur, exempte de solvant.

6. Verre antifeu selon la revendication 1 ou l'une des suivantes, **caractérisé en ce que** la bande protège-arête (5a) est en outre pourvue d'une feuille en PU (12) autocollante additionnelle, orientée vers l'extérieur.

7. Verre antifeu selon la revendication 6, **caractérisé en ce que** la feuille en PU (12) additionnelle présente une épaisseur comprise entre 200 et 500 µm et le revêtement adhésif (13) présente une épaisseur comprise entre 50 et 200 µm.

8. Verre antifeu selon la revendication 1 ou l'une des suivantes, **caractérisé en ce que** les angles du verre antifeu (1) sont pourvus d'une feuille protège-angle (15) additionnelle constituée d'une feuille en PU autocollante.

9. Verre antifeu selon la revendication 1 ou l'une des suivantes, **caractérisé en ce que** la feuille en PU de la feuille protège-coin (15) présente une épaisseur comprise entre 100 et 500 µm et son revêtement adhésif présente une épaisseur comprise entre 50 et 200 µm.

10. Verre antifeu selon la revendication 1 ou l'une des suivantes, **caractérisé en ce que** la feuille protège-coin (15) est conçue comme une pièce découpée, poinçonnée et préperforée dotée d'une couverture de silicone, du revêtement adhésif.
